# EUROPÄISCHE PATENTSCHRIFT

(11) **EP 1 857 253 B1**
(45) Veröffentlichungstag und Bekanntmachung des Hinweises auf die Patenterteilung: **04.04.2012**
(21) Anmeldenummer: 07008297.9
(22) Anmeldetag: 24.04.2007
(51) Int. Cl.: B29C 45/20, B29C 45/27

(54) **Verfahren zur Herstellung einer Düse zum Spritzgiessen**
Method of manufacturing a nozzle for injection moulding
Procédé de fabrication une buse pour moulage par injection

(30) Priorität: 15.05.2006 DE 202006007721 U
(43) Veröffentlichungstag der Anmeldung: 21.11.2007
(73) Patentinhaber: Schmelzmetall Deutschland GmbH, 97854 Steinfeld (DE)
(72) Erfinder: Bochmann, Werner, 97816 Lohr am Main (DE)
(74) Vertreter: Kloiber, Thomas

(56) Entgegenhaltungen:
- DE-A1-102005 050 161
- DE-B3-102004 009 806
- US-A- 6 164 954
- US-A1- 2005 112 231

## Beschreibung

Die Erfindung bezieht sich auf ein Verfahren zum Herstellen einer Düse zum nämlich Spritzgießen, einer Maschinendüse oder einer werkzeugseitigen Heißkanaldüse gemäß dem Oberbegriff des Patentanspruchs 1.

Derartige Düsen weisen einen einzigen Düsenkörper mit einem Düsenschaft und einer Düsenspitze sowie Verbindungseinrichtungen zum Verbinden der Düse mit der Spritzgießmaschine auf.

Je nach ihrem Einsatz werden solche Düsen unterschiedlich und auch aus unterschiedlichen Materialien hergestellt, um den thermischen und/oder mechanischen Belastungen der Düse während des Betriebes Rechnung zu tragen. Die übliche Maschinendüse ist das Bindeglied zwischen Extruder und Spritzgießwerkzeug. Über diese Düse soll möglichst ohne thermische Verluste ein schmelzflüssiger Kunststoff in das Spritzgießwerkzeug gelangen. In der Kaltkanal-Technik wird die Maschinendüse bei jedem Schuss mehr oder minder schlagartig an das Spritzgießwerkzeug angelegt. Hieraus ergeben sich entsprechende Anforderungen an die Düse in Bezug auf die Stabilität der Düsenspitze und die Stabilität der Verbindungseinrichtung, in der Regel ein Gewinde sowie den thermischen Haushalt, um insbesondere den schmelzflüssigen Kunststoff durch die Maschinendüse bis zum Spritzgießwerkzeug möglichst ohne thermische Verluste zu leiten.

Eine Heißkanaldüse ist Bestandteil des Spritzgießwerkzeuges. Bei der Heißkanaltechnik ist der Angusskanal, an dessen Ende die Heißkanaldüse sitzt, üblicherweise beheizt. Der Extruder steht bei dieser Technik ständig am Spritzgießwerkzeug an, sodass am Anspritzpunkt der Kunststoff immer in einer spritzförmigen Form anliegt.

Die bei der Kaftkanaltechnik eingesetzten Maschinendüsen werden häufig aus Werkzeugstahl gefertigt. Bei sehr kurzen Maschinendüsen ist dieses ausreichend, um den schmelzflüssigen Kunststoff noch schmelzflüssig in das Spritzgießwerkzeug einzuführen. Bei längeren Maschinendüsen ist aufgrund der geringen Wärmeleitfähigkeit der Werkzeugstähle eine zusätzliche Beheizung notwendig; bei sehr langen Maschinendüsen sind sogar häufig zwei Heizkreise erforderlich, um ein Einfrieren des Kunststoffes in der Maschinendüse zu verhindern. Für einen sicheren Betrieb ist eine Regelung des Heizkreises oder der mehreren Heizkreise unbedingt erforderlich, wodurch eine komplexe Regelung notwendig wird.

Aus der DE 10 2005 050 161 A1 ist bekannt, eine Verschlieschutzeinlage an eine Därenspitze anzulöten oder zu schweissen.

Um eine Heizung zu vermeiden, ist es zum Beispiel aus der WO 2005/105359 A1 bekannt, einen Rohling für eine Maschinendüse herzustellen, bei der der Düsenschaft vollständig aus einem hochwärmeleitfähigen Material, insbesondere Kupfer oder einer Kupferlegierung hergestellt ist, wobei ein weiterer Rohling für eine Düsenspitze aus Stahl oder einer Stahllegierung sich an den Düsenschaft in einer Kontaktebene berührend anschließt. Das Material des Düsenschaftes weist eine über den Rand der Kontaktfläche vorspringende Leiste auf und überlappt die Düsenspitze geringfügig. Die Verbindung zwischen den Rohlingen des Düsenschaftes und der Düsenspitze wird mittels eines Elektronenstrahles in der Kontaktebene durch das überlappende Kupfermaterial des Düsenschaftes thermisch hergestellt. Die Rohlinge vom Düsenschaft und der damit verbundenen Düsenspitze werden anschließend weiterbearbeitet, um die Düse endgültig fertig zu stellen. Hierzu werden in die beiden Rohlinge ein zentraler Düsenkanal eingearbeitet, die Spitze entsprechend zum Beispiel durch spanabhebende Bearbeitung ausgeformt und in den Kupferrohling des Düsenschaftes ein Gewinde zum Befestigen der Düse in der Spritzgießmaschine eingeschnitten.

Mit einer solchen Lösung kann ein Verschleißen der Düsenspitze relativ gut verhindert werden; andererseits verschleißt jedoch das in den Düsenschaft aus einer Kupferlegierung eingeschnittene Gewinde aufgrund der mechanischen Belastungen sehr schnell, wodurch ein Auswechseln der Düse extrem erschwert wird. Es ist vorgeschlagen worden, den gesamten "hinteren" Teil des Düsenschaftes, der im besonders temperaturempfindlichen Teil der Düse liegt, aus Stahl zu fertigen. Hierdurch wird wiederum die Wärmeleitfähigkeit der Düse beeinträchtigt, sodass gegebenenfalls Heizeinrichtungen notwendig sind, um den Kunststoff über die gesamte Länge der Düse im Schmelzzustand zu halten. Die Möglichkeit, zum Beispiel ein Stahlgewinde mit Hilfe eines Elektronenstrahles auf den Düsenschaft aus einer Kupferlegierung mit Hilfe eines Elektronenstrahles aufzuschweißen, führt zu keinem Erfolg, da die unterschiedlichen Materialien unterschiedliche elektrische Leitfähigkeit haben und bei einem außen liegendem Stahlgewinde keine Möglichkeit besteht, die beiden Teile mit Hilfe eines Elektronenstrahles zu verschweißen.

Um derartige Düsen zuverlässig verwenden zu können, ist eine erhöhte Extrudertemperatur notwendig, um den größeren Temperaturgradienten über die Länge der Düse auszugleichen.

Heißkanatdüsen sitzen in dem Spritzwerkzeug am Ende des beheizten Angusskanales. Um die thermischen Verluste über die Heißkanaldüse so gering wie möglich zu halten, sind um die Heißkanaldüse in der Regel Hohlräume vorgesehen, in die bewusst Kunststoff eindringen soll. Dieser erstarrt und dient als thermischer Isolator. Die Ausführung solcher Düsen ist kompliziert, da sehr dünne Kanäle in die Heißkanaldüse eingebracht werden müssen. Auch wenn die Heißkanaldüsen aus einer hochwärmeleitfähigen Kupferlegierung hergestellt werden, um die thermischen Verlust zu minimieren, ist der Verschleiß an der Düsenspitze in der Regel doch sehr groß, wodurch die Standzeit limitiert ist.

Der Erfindung liegt die Aufgabe zugrunde, ein Verfahren zum Herstellen einer Düse zum Spritzgiessen anzugeben, mit denen ein zu spritzender Kunststoff stets schmelzflüssig gehalten wird; außerdem soll die Düse einfach herzustellen sein und den thermischen und/oder mechanischen Belastungen beim Einsatz der Düse in einer Spritzgießmaschine sehr gut standhalten.

Diese Aufgabe ist gemäß der Erfindung durch die Merkmale des Patentanspruches 1 gelöst.

Demgemäß besteht der gesamte Düsenkörper aus Düsenschaft und Düsenspitze aus einem hoch wärmeleitfähigen Material, insbesondere Kupfer oder einer Kupferlegierung, wobei das hoch wärmeleitfähige Material nur an den thermisch und/oder mechanisch belasteten Stellen durch eine Schicht aus einem diesen Belastungen widerstehenden Material ersetzt wird. Dieses Material wird durch Laserauftragsschweißen auf den Düsenkörper aufgebracht.

Durch das hochwärmeleitfähige Material des Düsenkörpers wird der Kunststoff über die gesamte Länge der Düse schmelzflüssig gehalten, ohne dass eine zusätzliche Heizeinrichtung notwendig ist. Die Schicht aus einem den thermischen und/oder den mechanischen Belastungen widerstehendem Material wird konturnah, das heißt, in den Konturen der Düse liegenden Ausmaßen und nur dort und nur in der für die Funktion benötigten Stärke aufgebracht.

Bei einer Maschinendüse wird diese Schicht nur in den Endkonturen der Düse und an deren Stirnseite, das heißt in den Bereichen, wo die Maschinendüse an dem Spritzgießwerkzeug ansteht, aufgebracht; ferner wird eine solche Verschleißschutzschicht auch nur in dem Bereich der Verbindungseinrichtung zum Verbinden der Düse mit der Spritzgießmaschine, das heißt im Bereich des Gewindes aufgebracht. Beide Verschleißschutzschichten werden zum Beispiel aus Stahl oder einer Legierung ausgeführt, und dieses nur in der für die Funktion notwendigen Dicke.

Die Verschleißschutzschicht kann aus Stahl, einer Nickel- oder Kobaltbasislegierung oder einem Hartstoff sein. Düsenspitze und Gewinde können daher unabhängig voneinander den jeweiligen Anforderungen entsprechend in einem Arbeitsausgang ausgeführt werden.

Ebenso werden bei einer Heißkanaldüse im vorderen Bereich, das heißt im Bereich der Düsenspitze, ebenfalls kontumah und nur dort, wo es erforderlich ist, mit der Verschleißschutzschicht versehen. Die Mantelfläche der Düse wird in einem Verfahren und in einem Arbeitsgang mit der Schicht eines niedrig wärmeleitfähigen Werkstoffes oder einer entsprechenden Legierung, zum Beispiel einem herkömmlichen Werkzeugstahl etc., beschichtet. Mit der Beschichtung wird der notwendige thermische Isolatoreffekt erreicht.

Maschinendüsen, seien es Kaltkanaldüsen oder auch Heißkanaldüsen, können wesentlich einfacher als bisher hergestellt werden.

Als besonders günstig hat sich herausgestellt, dass die Schicht aus dem thermischen und/oder mechanischen Belastungen widerstehenden Material durch Laserauftragsschweißen aufgebracht ist. Für ein Verfahren zum Herstellen einer Düse zum Spritzgießen gemäß der Erfindung ist das Laserauftragsschweißen daher besonders günstig. Mit diesem Auftragsschweißen können pulverisierte Materialien oder Materialien in Drahtform auf Werkstücke mit einem Laser aufgeschweißt werden, wobei hierbei ein gezielter Materialauftrag auch bei filigranen Werkstücken erreicht wird. Vorteil ist unter anderem der eng auf die Schmelzzone begrenzte Wärmeeintrag, die hohen Aufheiz- und Abkühlgeschwindigkeiten und die genaue Steuerung der Energie des Laserstrahles etwa über eine geeignete Pulsformung. Insgesamt wird das Werkstück nur minimal thermisch belastet. Die aufgetragenen Materialien können, wenn notwendig, in üblicher Weise noch mechanisch nachbearbeitet, zum Beispiel geschliffen oder geschnitten werden, um die Konturen der Düse genau an die gewünschten Dimensionen anzupassen.

Weitere Ausgestaltungen der Erfindung gehen aus den Unteransprüchen hervor.

Die Erfindung ist anhand der Zeichnung näher erläutert; in dieser stellen dar:

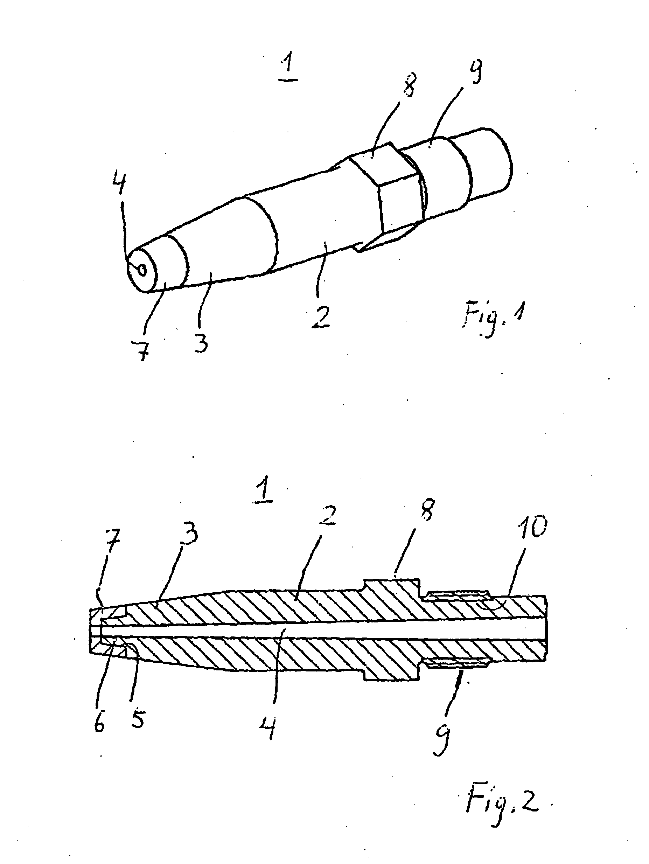

Figur 1 eine perspektivische Darstellung einer Maschinendüse, die gemäß der Erfindung hergestellt wurde.

Eine Maschinendüse 1 weist einen zylindrischen Düsenschaft 2 aus einer Kupferlegierung, z.B. K265 und eine einstückige Düsenspitze 3 ebenfalls aus dieser Kupferlegierung auf. Durch den gesamten Düsenkörper aus Düsenschaft 2 und Düsenspitze 3 erstreckt sich ein zentraler zur Spitze hin leicht konisch verlaufender Düsenkanal 4. Die Düsenspitze 3 ist im vorderen Bereich bei 5 abgefräst, sodass sich ein kurzer Kegelstumpf 6 ergibt. Dieser Kegelstumpf wird mit einer Hartmetallkappe 7 zum Beispiel aus Stellite sowohl in dem Außenbereich als auch auf der Stirnseite der Düse beschichtet, wobei diese Beschichtung durch Laserauftragsschweißen mit Hilfe eines Schweißpulvers oder eines zusätzlichen Schweißdrahtes erfolgt. Die Beschichtung erfolgt konturnah, das heißt, dass die Hartmetallkappe den äußeren Konturen der Düsenspritze 3 und der Kontur der Stirnseite der Düse folgt. Die Hartmetallkappe 7 ist nur in dem Bereich ausgebildet, in dem die Maschinendüse beim Betrieb bei jedem Fertigungsschuss an das Spritzgießwerkzeug anschlägt. Am gegenüber liegenden Ende der Düsenspitze ist an dem Düsenschaft eine Anschlagmutter 8 sowie ein Gewinde 9 aus einem Hartmetall vorgesehen; mit diesem Gewinde 9 wird die Düse in die Spritzgießmaschine eingeschraubt.

Dieses Gewinde besteht aus einem Stahl oder einer Stahllegierung und wird ebenfalls durch Laserauftragsschweißen eines Stahlpulvers oder eines Stahldrahtes in eine Ausnehmung 10 in dem Düsenschaft 2 aufgebracht.

Es ist ersichtlich, dass die gesamte Düse im Wesentlichen aus einem hoch wärmeleitfähigen Material besteht, sodass der zu verspritzende Kunststoff auch bei großen Längen der Düse schmelzfähig gehalten wird. Lediglich an den Stellen, die mechanisch und/oder thermisch belastet werden, das heißt im Bereich der Hartmetallkappe 7 und in dem Bereich des Gewindes 9 wird das hoch wärmeleitfähige Material des Düsenkörpers durch entsprechende Materialien ersetzt, die den dort auftretenden Belastungen widerstehen.

## Patentansprüche

1. Verfahren zum Herstellen einer Düse zum Spritzgießen, nämlich Maschinendüse, oder Werkzeugseitige Heißkanaldüse, mit einem einzigen Dusenkörper aus einem Düsenschaft und einer Düsenspitze, bei der der gesamte Düsenkörper (2, 3) aus einem hochwärmeleitfähigen Material, insbesondere Kupfer oder einer Kupferlegierung hergestellt ist und bei der zur Reduzierung thermischer und/oder mechanischer Belastungen der Düse (1) das hochwärmeleitfähige Material des Düsenkörpers (2, 3) nur an den belasteten Stellen durch eine Schicht (7, 9) aus einem den thermischen und/oder mechanischen Belastungen widerstehenden Material konturnah ersetzt wird, wobei die Schicht aus dem thermischen und/oder mechanischen Belastungen widerstehenden Material durch Laserauftragsschweißen aufgebracht wird.

2. Verfahren nach Anspruch 1 **dadurch gekennzeichnet, dass** die aufgebrachte Schicht mechanisch bearbeitet wird, um die Schicht an die gewünschte Kontur der Düse anzupassen.

3. Verfahren nach Anspruch 1 oder 2, **dadurch gekennzeichnet, dass** der Düsenkörper an den belasteten Stellen mit Ausnehmungen versehen wird, in die das thermischen und/oder mechanischen Belastungen widerstehende Material eingebracht wird.

4. Verfahren nach Anspruch 1, 2 oder 3 **dadurch gekennzeichnet, dass** im Bereich der Düsenspitze (3) lediglich an den mechanisch belasteten Stellen eine mechanisch widerstandfähige Schicht (7) aus einem Hartmetall oder einer Hartmetalllegierung vorgesehen wird.

5. Verfahren nach einem der vorhergelenken Ansprüche **dadurch gekennzeichnet, dass** die widerstandsfähige Schicht (7) nur im vorderen Bereich der Düsenspitze (3) auf deren Außenseite und deren Stirnseite vorgesehen wird.

6. Verfahren nach einem der vorhergehenden Ansprüche, **dadurch gekennzeichnet, dass** die Schicht (7, 9) aus Stahl, Stellite, einer Ni-Basislegierung oder dergleichen ist.

7. Verfahren nach einem der vorhergehenden Ansprüche, **dadurch gekennzeichnet, dass** in der der Düsenspitze (3) abgewandten Seite des Düsenschaftes (2) der Maschinendüse die Befestigungseinrichtung, insbesondere ein Gewinde (9) mit der thermischen und/oder mechanischen Belastungen widerstehenden Schicht (7) versehen wird.

8. Verfahren nach einem der vorhergehenden Ansprüche, **dadurch gekennzeichnet, dass** die Schicht (7, 9) eine wesentlich geringere Dicke aufweist als der Düsenkörper.

## Claims

1. A method for producing a nozzle for injection moulding, in particular a machine nozzle or a tool-side hot runner nozzle, having a single nozzle body comprising a nozzle shaft and a nozzle tip, in which the entire nozzle body (2, 3) is produced from a highly heat conductive material, particularly copper or a copper alloy, and in which in order to reduce the thermal and/or mechanical loads on the nozzle (1) the highly heat conductive material of the nozzle body (2, 3) is replaced in close-to-contour manner only at load points with a layer (7, 9) of a material that is able to withstand the thermal and/or mechanical loads, wherein the layer of the material that is resistant to thermal and/or mechanical loads is applied by laser cladding.

2. The method as recited in claim 1, **characterized in that** the layer applied is machined mechanically to adapt the layer to the desired contour of the nozzle.

3. The method as recited in claim 1 or 2, **characterized in that** the nozzle body is furnished with recesses at the points under load, in which the material that is capable of withstanding the thermal and/or mechanical loads is deposited.

4. The method as recited in claim 1, 2 or 3, **characterized in that** in the area of the nozzle tip (3) a mechanically resistant layer (7) of a hard metal or a hard metal alloy is provided at the mechanically loaded points only.

5. The method as recited in any of the preceding claims, **characterized in that** the resistant layer (7) is provided only in the front area of the nozzle tip (3) on the outside and the frontal face thereof.

6. The method as recited in any of the preceding claims, **characterized in that** the layer (7, 9) is of steel, stellite, a nickel-based alloy or similar.

7. The method as recited in any of the preceding claims, **characterized in that** the fastening device, particularly a thread (9) is furnished with the layer (7) that is resistant to thermal and/or mechanical loads on the side
of the nozzle shaft (2) of the machine nozzle that is farthest from the nozzle tip (3).

8. The method as recited in any of the preceding claims, **characterized in that** the layer (7, 9) is considerably less thick than the nozzle body.

## Revendications

1. Procédé de fabrication d'une buse de moulage par injection, à savoir une buse de machine ou une buse à canal chauffant d'outil comportant un seul corps de buse composé d'une tige de buse et d'une pointe de buse, dans lequel l'ensemble du corps de buse (2, 3) est fait d'un matériau fortement conducteur thermique, en particulier du cuivre ou un alliage de cuivre, et dans lequel, pour réduire les contraintes thermiques et/ou mécaniques de la buse (1), le matériau fortement conducteur thermique du corps de buse (2, 3) est remplacé, uniquement aux points sous contrainte, par une couche (7, 9) de matériau résistant aux contraintes thermiques et/ou mécaniques, la couche faite de matériau résistant aux contraintes thermiques et/ou mécaniques étant appliquée par soudage par application de laser.

2. Procédé selon la revendication 1, **caractérisé en ce que** la couche appliquée est usinée mécaniquement afin d'adapter la couche au contour souhaité de la buse.

3. Procédé selon la revendication 1 ou 2, **caractérisé en ce que** le corps de buse est pourvu aux points sous contrainte d'évidements dans lesquels le matériau résistant aux contraintes thermiques et/ou mécaniques est incorporé.

4. Procédé selon la revendication 1, 2 ou 3, **caractérisé en ce que**, au niveau de la pointe de buse (3), seulement aux points sous contrainte mécanique, une couche mécaniquement résistante (7) faite de métal dur ou d'alliage de métal dur est prévue.

5. Procédé selon une des revendications précédentes, **caractérisé en ce que** la couche mécaniquement résistante (7) n'est prévue que dans la partie avant de la pointe de buse (3), sur sa face extérieure et sa face frontale.

6. Procédé selon une des revendications précédentes, **caractérisé en ce que** la couche (7, 9) est en acier, stellite, alliage à base de Ni ou similaire.

7. Procédé selon une des revendications précédentes, **caractérisé en ce que**, sur la face détournée de la pointe de buse (3) de la tige de la buse (2) de la buse de machine, le dispositif de fixation, en particulier un filetage (9) est pourvu de la couche résistant aux contraintes thermiques et/ou mécaniques (7).

8. Procédé selon une des revendications précédentes, **caractérisé en ce que** la couche (7) a une épaisseur sensiblement plus faible que celle du corps de buse.
